# EUROPEAN PATENT SPECIFICATION

(11) **EP 0 349 962 B1**
(45) Date of publication and mention of the grant of the patent: **17.04.1996**
(21) Application number: 89112135.2
(22) Date of filing: 03.07.1989
(51) Int. Cl.: C08G 63/672, C08K 3/00, C08K 5/00

(54) **Thermoplastic copolyesters having elastomeric properties**
Thermoplastische Copolyester mit elastomeren Eigenschaften
Copolyesters thermoplastiques ayant de propriétés élastomères

(30) Priority: 04.07.1988 IT 2121288
(43) Date of publication of application: 10.01.1990
(73) Proprietor: ENICHEM S.p.A., I-20124 Milano (IT)
(72) Inventor: Chiolle, Antonio, Dr. Chem., I-44100 Ferrara (IT); Maltoni, Gian Paolo, I-44100 Ferrara (IT); Stella, Romolo, I-45030 St. Maria Maddalena Rovigo (IT)
(74) Representative: Weinhold, Peter, Dr.

(56) References cited:
- EP-A- 0 126 454
- EP-A- 0 200 217
- EP-A- 0 204 528
- EP-A- 0 239 986
- WO-A-82/01711
- DE-A- 3 132 059
- DE-A- 3 427 236
- US-A- 3 023 192
- US-A- 3 775 373

## Description

The present invention relates to segmented thermoplastic copolyesters endowed with elastomeric properties.

From the literature there are known thermoplastic copolyesters endowed with elastomeric properties which consist of a multiplicity of long-chain ester units and short-chain ester units connected to each other in head-to-tail fashion through ester linkages, said long-chain ester units being represented by the formula: 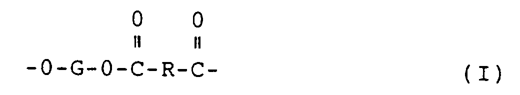 and said short-chain ester units being represented by the formula: 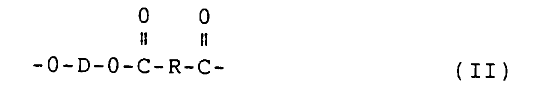 wherein
- G: is a divalent radical remaining after the removal of the terminal hydroxy groups from a poly-(alkylene oxide)-glycol having an average molecular weight within the range of from about 400 to 6000 and a carbon/oxygen ratio of about 2.0 to 4.3;
- R: is a divalent radical remaining after the removal of the carboxy groups from a dicarboxylic acid having a molecular weight of less than about 300, and
- D: is a divalent radical remaining after the removal of the hydroxy groups from a diol having a molecular weight of less than about 250 (see, e.g., US-A-3,023,192, US-A-3,651,015, IT-A-947,589, IT-A-963,304, and IT-A-973,059).

Such copolyesters, however, although displaying such valuable physical characteristics as swelling resistance in non-polar liquids, good low-temperature mechanical properties, etc. have proved to be not very suitable for use in the extrusion of sheaths and of films of uniform thickness intended to be employed, e.g., as protective coatings for electric cables, electronic contacts, etc., wherein materials are required, which have low melting points and good mechanical properties (tensile strength and modulus), combined with a high tear and abrasion resistance.

US patent No. 3,775,373 describes segmented thermoplastic copolyesters comprising a poly(alkylene oxide) glycol having a molecular weight of about 150 to 250 and a specific carbon to oxygen ratio. In some cases mixtures of polyethylene oxide glycol and a second (different) poly(alkylene oxide) glycol, such as poly(tetramethylene oxide) glycol with a molecular weight range of from 150 to 250, may be employed. The water swell values of the obtained copolyesters are not fully satisfactory.

It has now surprisingly been found that segmented thermoplastic copolyesters of the above specified type show higher values of hardness, density, tensile strength and tear resistance than the known copolyesters and also have sufficiently low melting points for use in the production of sheaths for cables when the long-chain segments thereof are derived from a mixture of poly-(tetramethylene oxide)-glycol having a molecular weight within the range of from 650 to 1000, and of poly-(tetramethylene oxide)-glycol having a molecular weight of less than 300, in weight proportions within the range of from 9:1 to 1:9.

Furthermore, although they have lower melting points, such products also show a higher crystallization rate, a feature which, besides making it possible to coat materials which are not very temperature resistant (PVC, PE, etc.) also allows to extrude the sheaths at a higher rate.

These products can be rendered flame-proof by means of suitable synergistic systems composed of organic and/or inorganic substances (fillers) without impairing their mechanical properties and processability to any significant extent.

Therefore, subject matter of the present invention are segmented, elastomeric, thermoplastic copolyesters essentially consisting of a multiplicity of (repeating) long-chain ester units and short-chain ester units linked to each other in head-to-tail fashion through ester bonds, said long-chain ester units being represented by the formula: 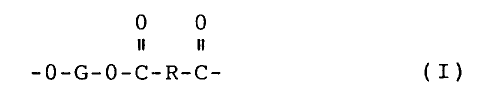 and said short-chain ester units being represented by the formula: 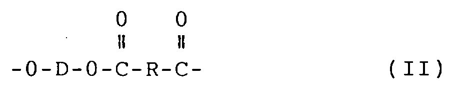 wherein
- G: represents a divalent radical remaining after the removal of the terminal hydroxy groups from a poly-(alkylene oxide)-glycol having an average molecular weight of not more than about 6000;
- R: is a divalent radical remaining after the removal of the carboxy groups from a dicarboxylic acid having a molecular weight of less than about 300, and
- D: is a divalent radical remaining after the removal of the hydroxy groups from a diol having a molecular weight of less than about 250 and which is different from poly(tetramethylene oxide) glycol
which are characterized in that
- G is constituted by divalent radicals derivable from a mixture of poly-(tetramethylene oxide)-glycol having a molecular weight within the range of from 650 to 1000, and of poly-(tetramethylene oxide)-glycol having a molecular weight of less than 300, in weight proportions within the range of from 9:1 to 1:9;
- the ratio carbon/oxygen in G ranges from 1.8 to 4.3;
- the amount of short-chain ester units ranges from 25 to 80% by weight, based on the weight of the polyesters.

Another subject matter of the present invention are compositions of segmented copolyesters as defined above, containing from about 15 to about 45% by weight, based on the composition,of flame-proofing systems based on aromatic halides, aliphatic halides or products not containing halogen atoms.

A further subject matter of the present invention is the use of the segmented copolyesters as specified above, in the presence or absence of added flame-proofing systems based on aromatic halides, aliphatic halides or products not containing halogen atoms, for the extrusion of sheaths, films and fibres.

Finally, a still further subject matter of the present invention are flame-proof sheaths,preferably for low-voltage cables, completely or partially composed of said segmented polyesters to which the above flame-proofing systems have been added.

The expression "long-chain ester units" in connection with units in a polymer chain relates to the reaction product of poly(tetramethylene oxide) glycol and a dicarboxylic acid. Such "long-chain ester units", which represent a repeating unit in the copolyesters according to the present invention, comply with the above formula (I).

Particularly, units of G of formula (I) are constituted by divalent radicals derivable from a mixture of poly(tetramethylene oxide) glycol having a molecular weight of from 650 to 1000 and poly(tetramethylene oxide) glycol having a molecular weight of less than 300. The poly(tetramethylene oxide) glycols are employed in a weight ratio of from 9:1 to 1:9.

The expression "short-chain ester units", in connection with units present in a polymeric chain, relates to the reaction product of a diol having a low molecular weight (lower than 250) and a dicarboxylic acid under formation of ester units represented by formula (II) above.

Among the diols having a low molecular weight which may be reacted in order to form short-chain ester segments are noncyclic, alicyclic and aromatic di-hydroxy compounds. Diols of from 2 to 15 carbon atoms, such as ethylene-glycol, propylene-glycol, isobutylene-glycol, tetramethylene-glycol, pentamethylene-glycol, 2,2-dimethyl-trimethylene-glycol, hexamethylene-glycol, decamethylene glycol, di-hydroxy-cyclohexane, cyclohexane-dimethanol, resorcinol, hydroquinone, 1,5-di-hydroxy-naphthalene, etc., are preferred.

Particularly preferred are aliphatic diols containing from 2 to 8 carbon atoms. Aromatic di-hydroxy compounds which can also be used are bisphenols, such as bis-(p-hydroxy)-diphenyl, bis-(p-hydroxyphenyl)-methane and bis-(p-hydroxyphenyl)-propane.

Equivalent ester-forming derivatives of diols can be used as well (for example, ethylene oxide or ethylene carbonate can be used instead of ethylene glycol). The expression "low-molecular-weight diols" used in the present context should thus be understood as including all of the derivatives suitable for forming esters. However, the condition with respect to molecular weight only applies to the diol, but not to the derivatives thereof. 1,4-Butane-diol is particularly preferred for the purposes of the present invention.

Dicarboxylic acids which may be reacted with the above long-chain glycols and the diols having a low molecular weight in order to produce the copolyesters according to the present invention are aliphatic, cycloaliphatic or aromatic dicarboxylic acids having a low molecular weight, i,e., having a molecular weight of less than 300. The term "dicarboxylic acids" as used herein also encompasses equivalent derivatives of dicarboxylic acids which show a behaviour substantially similar to the dicarboxylic acids in the reaction with glycols and diols for the formation of the copolyester polymers. These equivalent compounds include esters and ester-forming derivatives, such as, e.g., halides and anhydrides. However, the condition with respect to molecular weight always relates to the acid, and not to its ester equivalent or to its derivative suitable for forming esters.

Accordingly, the term "dicarboxylic acid" also comprises an ester of a dicarboxylic acid having a molecular weight higher than about 300, or an equivalent of a dicarboxylic acid having a molecular weight higher than about 300, provided that the corresponding acid still has a molecular weight of less than 300. The dicarboxylic acids may contain any substituent or any combination of substituents which do not interfere to a significant extent with the formation of the copolyester polymer and the use of the polymer in the end products according to the present invention.

Within the context of the present invention, by "aliphatic dicarboxylic acids" those carboxylic acids are meant which contain two carboxylic groups, each of said carboxy groups being bonded to a saturated carbon atom. If the carbon atom to which the carboxy group is bonded is a saturated one and is inside a ring, the acid is a cycloaliphatic one. Often, aliphatic acids or cycloaliphatic acids containing a conjugated unsaturation cannot be used, in that they are subject to homopolymerization. However, some unsaturated acids, such as, e.g., maleic acid, can still be used.

The term "aromatic dicarboxylic acids", used in the instant context, indicates those dicarboxylic acids which contain two carboxy groups, with each carboxy group being bonded to a carbon atom of an either isolated or condensed aromatic ring. It is not necesssary that both of said carboxy groups are bonded to the same aromatic ring, and, when more than one ring is present in the molecule, said rings can be linked to each other through divalent aliphatic or aromatic radicals, heteroatom-containing groups, such as, e.g., -0- or -SO₂-, or even by means of a simple covalent bond.

Examples of aliphatic and cycloaliphatic dicarboxylic acids suitable for the purposes of the present invention are sebacic acid, 1,3-cyclohexane-dicarboxylic acid, 1,4-cyclohexane-dicarboxylic acid, adipic acid, glutaric acid, succinic acid, oxalic acid, azelaic acid, diethyl-malonic acid, allyl-malonic acid, 4-cyclohexene-1,2-dicarboxylic acid, 2-ethyl-suberic acid, 2,2,3,3-tetramethyl-succinic acid, cyclopentane-dicarboxylic acid, decahydro-1,5-naphthalene-dicarboxylic acid, 4,4′-dicyclohexyl-dicarboxylic acid, decahydro-2,6-naphthalene-dicarboxylic acid, 4,4′-methylene-bis-(cyclohexyl)-carboxylic acid, 3,4-furan-dicarboxylic acid, 1,1-cyclobutane-dicarboxylic acid, etc. Cyclohexane-dicarboxylic acid and adipic acid are preferred (cyclo)aliphatic dicarboxylic acids.

Examples of aromatic dicarboxylic acids which can be used comprise phthalic acid, isophthalic acid and terephthalic acid, dibenzoic acid; dicarboxylic compounds containing two benzene rings, such as, e.g., bis-(para-carboxy-phenyl)-methane, paraoxy-(para-carboxy-phenyl)-benzoic acid, ethylene-bis-(paraoxy-benzoic acid), 1,5-naphthalene-dicarboxylic acid, 2,6-naphthalene-dicarboxylic acid, 2,7-naphthalene-dicarboxylic acid, phenanthrene-dicarboxylic acid, anthracene-dicarboxylic acid, 4,4′-sulfonyl-dibenzoic acid and their (C₁-C₁₂)-alkyl derivatives and ring-substituted derivatives, such as, e.g., halogenated (e.g. F, Cl, Br) derivatives, (preferably C₁₋₄-) alkoxy derivatives and aryl derivatives.

Aromatic acids containing a hydroxy group, such as, e.g., para-(β-hydroxy-ethoxy)-benzoic acid, can be used as well, provided that an (aromatic) dicarboxylic acid is also present.

Aromatic dicarboxylic acids constitute a preferred class of acids for the preparation of the copolyesters according to the present invention.

Among the aromatic acids, those which contain from 8 to 16 carbon atoms are preferred; particularly preferred are phenylene-dicarboxylic acids, i.e., phthalic acid, isophthalic acid and terephthalic acid. In particular, either terephthalic acid alone or a mixture of terephthalic acid and isophthalic acid are preferred.

Preferably at least 70% by mol of the dicarboxylic acids used for the preparation of the polymers of the present invention are accounted for by terephthalic acid, i.e., at least 70% of the "R" groups in the above formulae (I) and (II) are preferably 1,4-phenylene radicals.

The carboxylic acids and their derivatives and the polymeric glycol are included in the end product in the same molar proportions in which they are contained in the reaction mixture. The amount of low-molecular-weight diol actually contained in the end product corresponds to the difference between the mols of diacid and the mols of polymeric glycol contained in the reaction mixture.

The copolyesters according to the present invention contain 25 to 80% by weight (preferably 55 to 75% b.w.) of short-chain ester units corresponding to the above formula (II), with the remaining portion (i.e. 20 to 75% b.w.) being constituted by long-chain ester units corresponding to the above formula (I).

In these units, at least 10% of the(poly-(tetramethylene oxide)-) glycol-based units should be derived from poly-(tetramethylene oxide)-glycols having a molecular weight of less than 300. When the amount of such low-molecular-weight poly-(tetramethylene oxide)-glycol units is lower than 10% by weight, the melting point of the resulting copolyester is not low enough to afford a suitable product for the applications mentioned above (extrusion of sheaths, films, and so on).

The most preferred copolyesters for the purposes of the present invention are those which are prepared from terephthalic acid (e.g. in the form of dimethyl terephthalate (DMT)), 1,4-butanediol (BD) and a mixture of poly-tetramethylene-glycol (PTMG) having an (average) molecular weight of about 1000 or of about 650, with at least 10% by weight (based on the total amount of long-chain units) of PTMG having a molecular weight of about 250.

The polymers according to the present invention can suitably be prepared by means of a normal transesterification reaction. A preferred process comprises the heating of e.g. the dimethyl ester of terephthalic acid with a long-chain glycol and a molar excess of a butanediol in the presence of a catalyst at 150-260°C, followed by the removal by distillation of the methanol formed in the ester exchange reaction. The heating is continued until the removal of methanol is complete. Depending on the temperature, the catalyst and the excess of glycol employed, the polymerization usually is complete within a few minutes up to some hours.

This process makes it possible to prepare a low-molecular-weight prepolymer which is then converted into a high-molecular-weight copolyester according to the present invention by means of the process described below. Such prepolymers can also be prepared by means of a certain number of alternating esterification reactions, or of ester exchange reactions. For instance, the long-chain glycol can be reacted with a homopolymer or a copolymer of short-chain esters, having a low molecular weight, in the presence of a catalyst, until a randomization has taken place.

The short-chain ester homopolymer or copolymer can as well be prepared by means of a transesterification, both from dimethyl-esters and low-molecular-weight diols and from the free acids and the diol-acetates.

In addition, the prepolymer can be prepared by carrying out said process in the presence of a long-chain glycol.

The molecular weight of the resulting prepolymer is then increased by distilling off the excess of the low-molecular-weight diol (polycondensation). During this distillation, a further transesterification occurs, which leads to the increase in molecular weight and to a random dispersion of the various copolyester units in the molecule.

In order to avoid excessively long periods of time for which the polymer has to be kept at high temperatures and the resulting possibility of irreversible thermal degradation, catalysts for the ester interchange reaction should be employed. While a wide variety of catalysts can be used, the organic titanates, such as, e.g., titanium tetrabutylate, used either alone or in combination with magnesium or calcium acetate , are preferred. Also complex titanates, such as Mg[HTi(OR)₆]₂, derived from alkali metal alkoxides or alkaline-earth metal alkoxides and esters of titanic acid, may prove suitable. Inorganic titanates, such as lanthanum titanate, mixtures of calcium acetate and antimony dioxide, and lithium and magnesium alkoxides are examples of further catalysts which can be used.

The ester interchange polymerizations are generally carried out in the molten state, but inert solvents can be used as well in order to facilitate the removal of volatile components from the reaction mass at low temperatures.

Although the copolyesters according to the present invention display many advantageous characteristics, it is sometimes worthwile to stabilize the final product towards heat or U.V. light. Such a stabilization may be accomplished by incorporating into the polyester compositions stabilizers, such as phenols and their derivatives, amines and their derivatives, compounds containing both hydroxy and amino groups, hydroxyazines, oximes, polymeric phenol esters and salts of polyvalent metals in which the metal is in its lowest valency state. Examples of phenolic derivatives which can be used as stabilizers comprise 4,4′-bis-(2,6-di.tert.-butyl-phenol), 1,3,5-trimethyl-2,4,6-tris-[3,5-di-tert.-butyl-4-hydroxybenzy]-benzene and 4,4′-butylidene-bis-(6-tert.-butyl-m-cresol).

Typical stabilizers of the amine type comprise N,N′-bis-(β-naphthyl)-p-phenylene-diamine, N,N′-bis-(1-methyl-heptyl)-p-phenylene-diamine and phenyl-β-naphthyl-amine and its reaction products with aldehydes.

Substituted benzotriazoles and/or benzophenones are further examples of suitable U.V.-stabilizers.

The characteristics of the copolyester according to the present invention can be further modified by means of the introduction of various conventional inorganic fillers, such as, e.g., carbon black, silica gel, alumina, clay, fiberglass, etc. In general, these additives increase the modulus of the material, although at the expense of elongation at break, tear strength and abrasion resistance.

Furthermore, the product can be rendered flame-proof (UL 94 Class: V2, VO, etc.) by means of the addition of various flame-proofing systems containing aromatic halides, or of new types of flame-proofing systems containing aliphatic halides or containing no halogen atoms at all, in amounts ranging from 15 to 45% by weight, based on the end product. The polyesters according to the present invention, to which the two last mentioned types of flame-proofing systems were added, are endowed with better fire-retardant properties than the traditional segmented thermoplastic copolyesters, are capable of passing the "Steiner 20 Foot Tunnel Test" as prescribed by UL 910, and can reach a rating of VO in the "vertical test" according to UL 94.

As conventional flame-proofing systems there can, for instance, be used octabromo-bisphenol A with Sb₂O₃ in a weight ratio of about 1.5:1, new types of flame-proofing substances,such as melamine hydrobromide (see EP-A-0200 217), combined with Sb₂O₃ in a weight ratio of about 3:1, or, finally, synergistic systems not containing halogen atoms, such as piperazine pyrophosphate acid combined with melamine phosphate, in a weight ratio of from 3:1 to 1:1 (EP-A-0126454).

As mentioned above, in the case of the two latter flame-proofing systems, products can be obtained, which show an optimum combination of characteristics in terms of:
- possible extrusion rate of the sheaths;
- aesthetic appearance;
- value of smoke;
- level of being flame-proof.

In contrast thereto, the above flame-proofing systems are not very efficient in the case of conventional elastomeric copolyesters with a high melting point, because during the processing thereof, the latter undergo partial degradation.

The following examples are given in order to illustrate the present invention without limiting it. Unless indicated otherwise, all parts, proportions and parameters given in the following are by weight.

### Example 1

A segmented copolyester according to the present invention was prepared as follows: A 3-1 autoclave equipped with distillation column, variable-speed stirring means and a temperature control system was charged with 613 g of dimethyl-terephthalate, 22 g of isophthalic acid, 244 g of 1,4-butane-diol (excess: 0.3 mol), 263 g of PTMG 250 and 116 g of PTMG 650. The temperature was gradually increased to 140-150°C over about 1 hour, and 150 ppm of Ti(OBu)₄ previously dissolved in a few (about 10 to 20) ml of butanediol were added. After a short induction time, the transesterification reaction started. Said reaction was evidenced by an increase in the column overhead temperature to about 65°C, which indicated the removal of methanol. The temperature of the reaction mass was gradually increased up to 205°C (within 2 hours) and was kept constant at this value until the distillation of methanol was complete.

Thereupon 150 ppm of catalyst (titanium tetrabutylate) and about 4000 ppm of stabilizer (Irganox® 1010) were added and vacuum was gradually applied until a residual pressure of about 0.05 mm Hg was reached (within about 30 minutes). Heating was continued until an internal temperature of about 250°C was reached. The end of the reaction was determined by a measurement of the load applied to the stirrer, which is proportional to the viscosity of the product, i.e., to the (average) molecular weight reached. When the reaction was over, the polymer was discharged by extrusion onto a water-cooled conveyor belt, and was chopped into small cubic granules.

### Examples 2 - 7

By following the procedure of Example 1, but using different amounts of the various monomers, copolyesters having the properties reported in Table 1 were prepared.

In Examples 2 and 4 (comparative), PTMEG 250 was the only long-chain component, in Examples 3 and 5 (comparative Examples) all of the long-chain components had a molecular weight higher than 300 (PTMEG 1000).

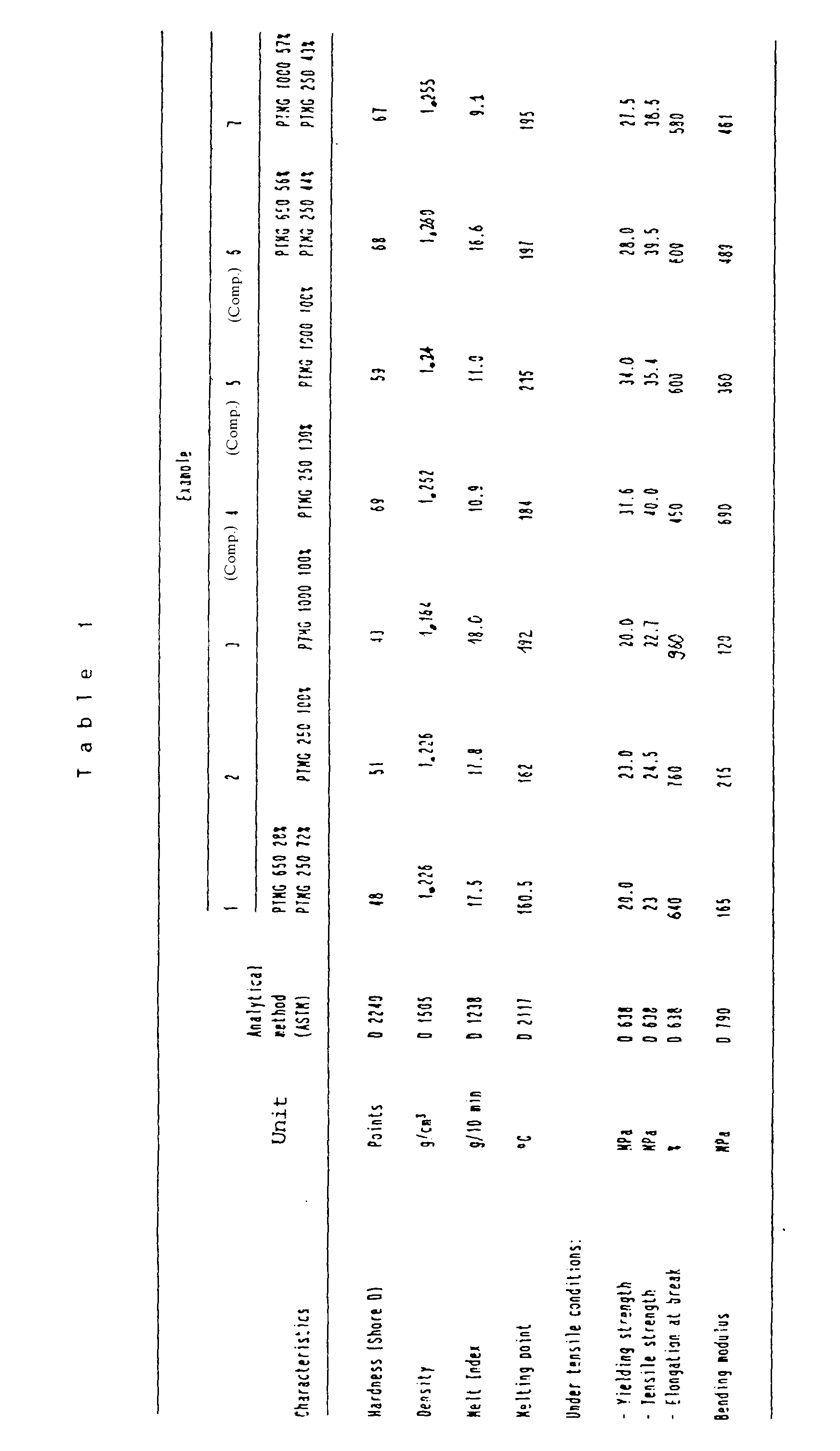

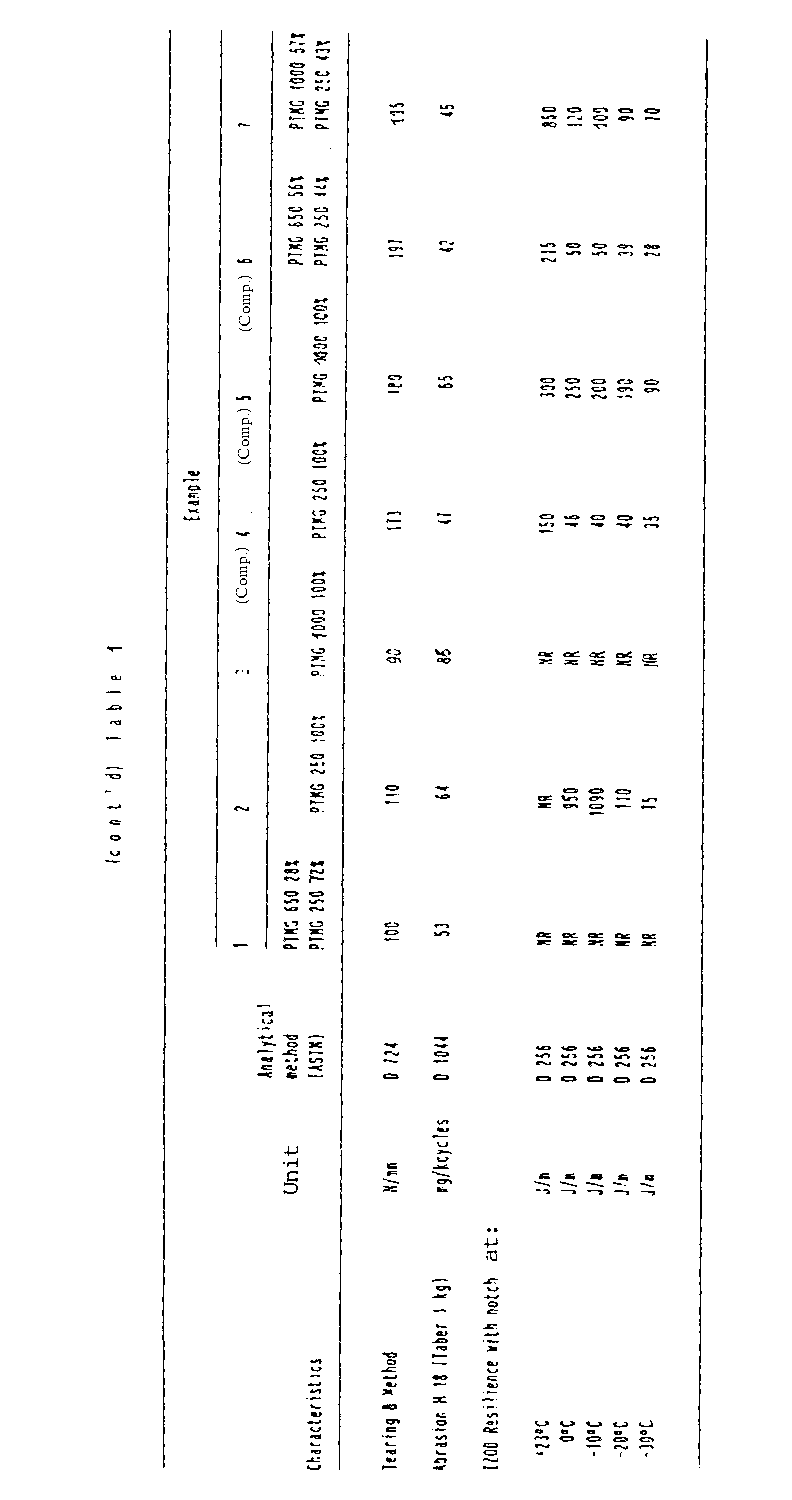

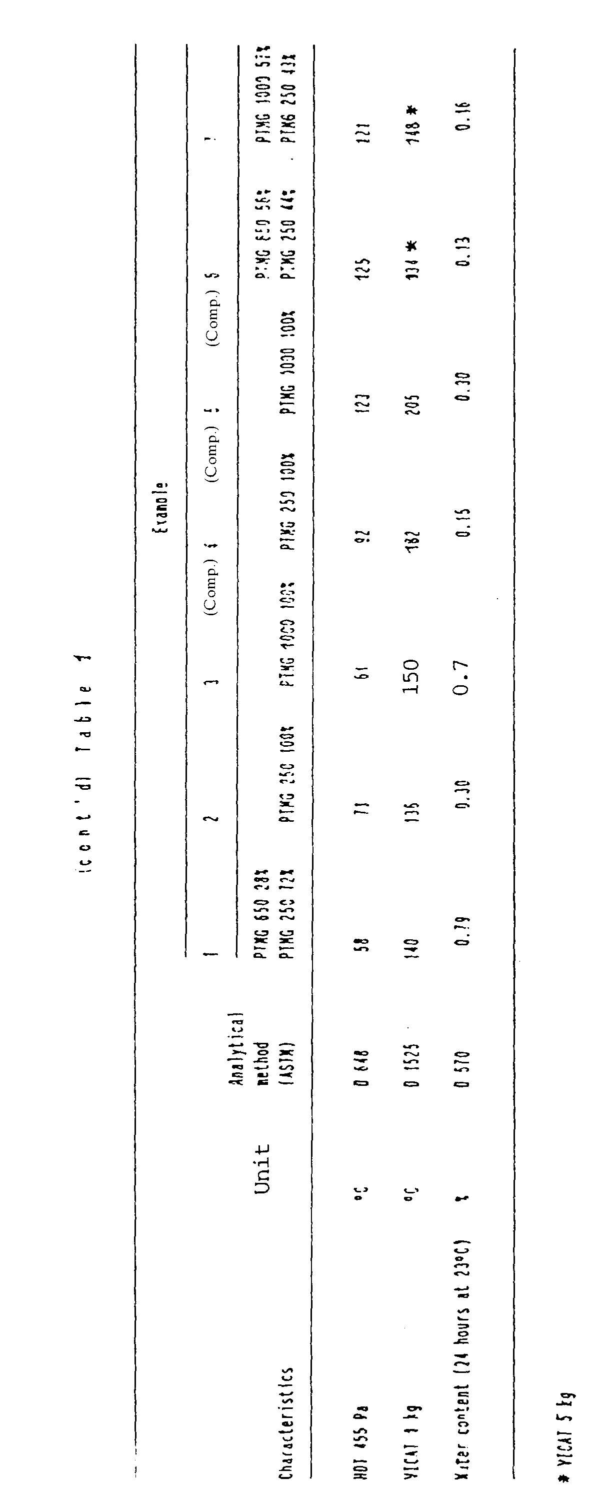

### Examples 8 and 9

Examples 8 and 9 relate to the preparation of flame-proof formulations. A master batch (MBO1SE) was prepared as follows: 50 kg of polymer in powder form having the compositions given in Examples 6 and 7 were mixed in a turbomixer with 50 kg of a mixture (in powder form) of Sb₂O₃ and octabromo-bisphenol A in a ratio of 1:1.5 by weight.

The resulting powder was then extruded in a twin-screw extruder at a temperature of from 180 to 200°C. The granules thus obtained were dried and used as master batch (in an amount of 15% by weight) for the preparation of the flame-proof formulations of Examples 8 and 9, the mechanical characteristics and flame-proof properties of which are reported in Table 2.

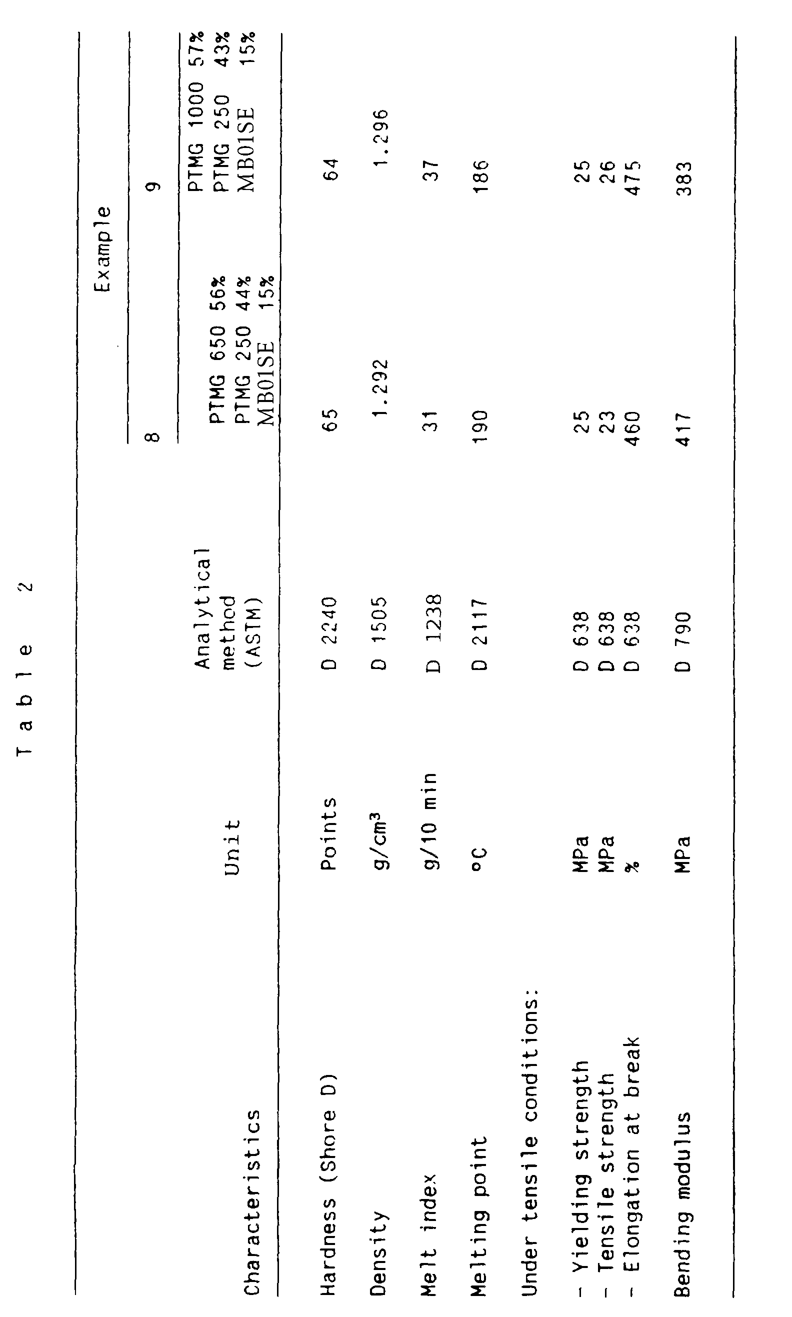

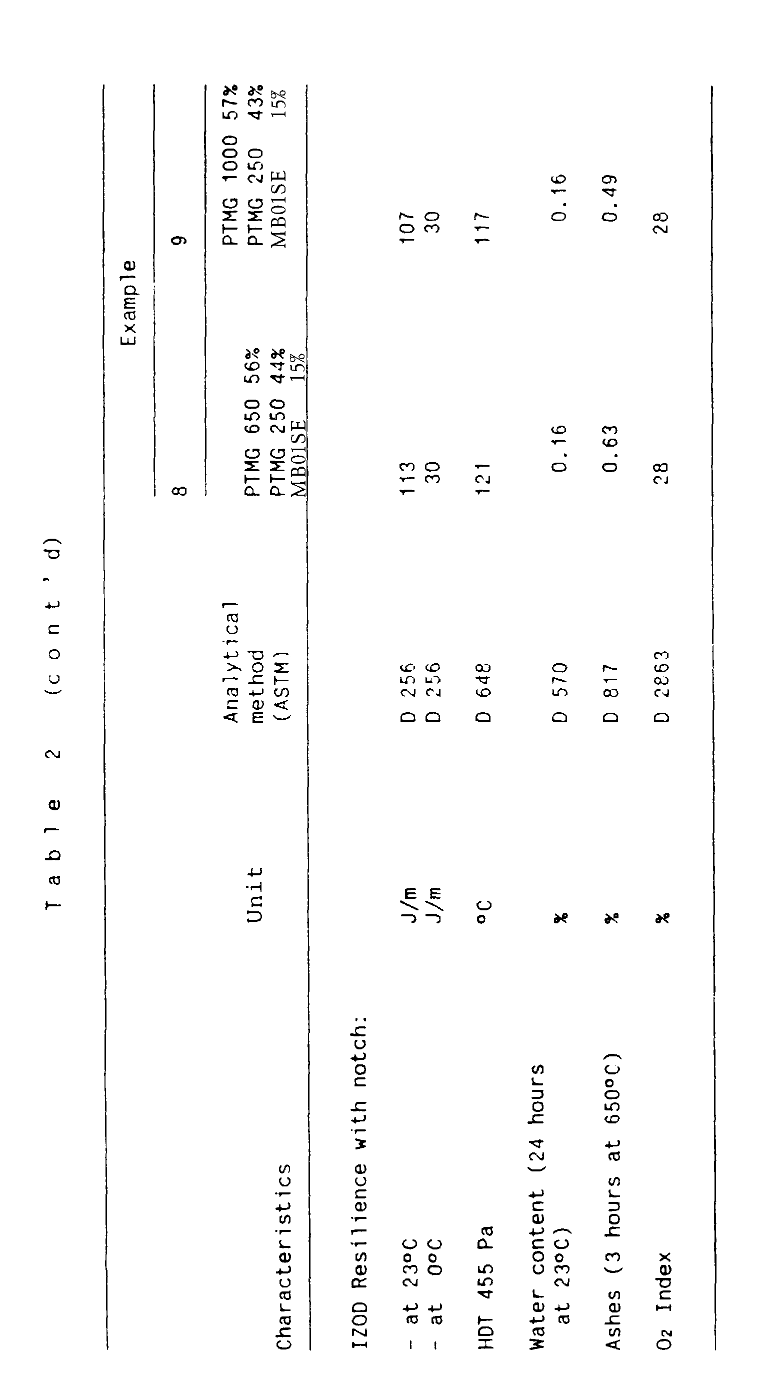

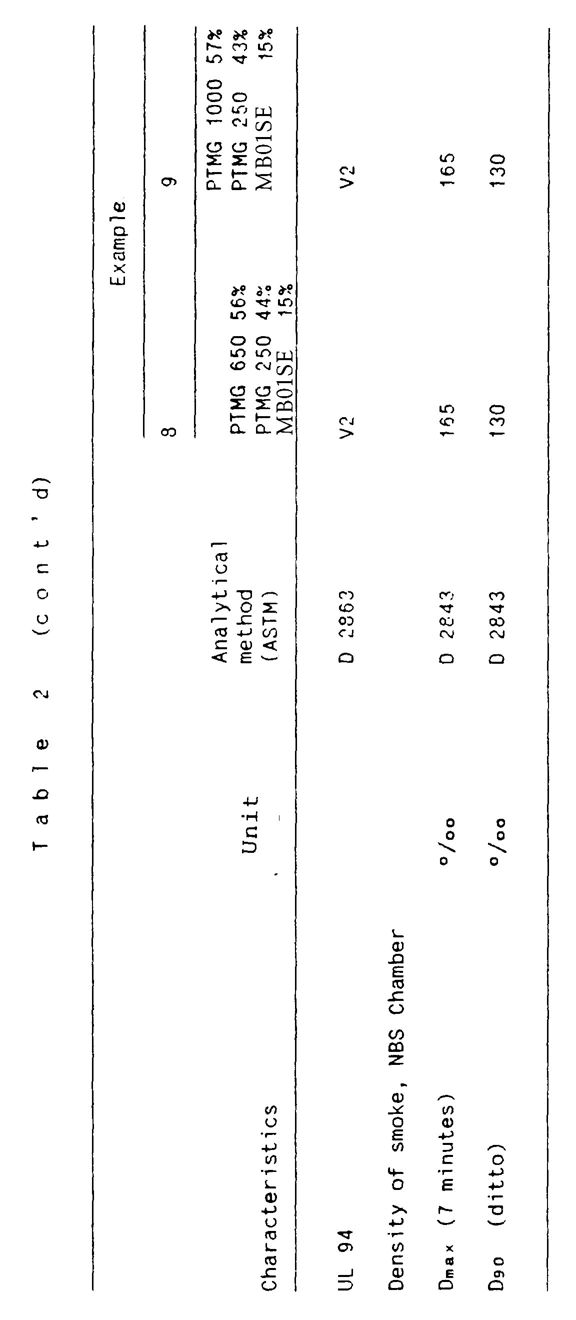

### Example 10

By following the procedure of Examples 8 and 9, a formulation was prepared by using the matrix of Example 1 and the flame-proofing system of Examples 8 and 9. The mechanical characteristics and the flame behaviour are reported in Table 3.

### Example 11

By using the matrix described in Example 1 and following, the procedure of Example 10, 6 kg of melamine hydrobromide, 2 kg of Sb₂O₃ and 0.5 g of INTEROX® (a radical promoting peroxide) were mixed. The mechanical characteristics and the flame behaviour are reported in Table 3.

### Example 12

By using the matrix described in Example 1 and following, the procedure of Example 10, 27 kg of piperazine phosphate (PAP), 8 kg of melamine phosphate (MP), 0.5% by weight, based on the total amount of the components, of TiO₂, and 0.5% by weight, based on the total amount of the components, of IRGANOX® , very finely ground (size of the particles of the order of µm), were mixed. The mechanical characteristics and the results of flame behaviour are reported in Table 3.

**Table 3**

| Characteristics | Unit | Analytical Method (ASTM) | Example | | |
|---|---|---|---|---|---|
| | | | 10 | 11 | 12 |
| Hardness (Shore D) | Points | D 2240 | 49 | 50 | 57 |
| Density | g/cm³ | D 1238 | 1.226 | 1.25 | 1.351 |
| Tensile strength | MPa | D 638 | 17.5 | 15.9 | 12 |

| (under traction) | | | | | |
|---|---|---|---|---|---|
| Elongation at break | % | D 638 | 630 | 550 | 267 |
| Bending modulus | MPa | D 790 | 150 | 197 | 346 |
| Ash content (3 hrs at 650°C) | % | D 817 | 0.98 | 1.01 | -- |

| Flame Behaviour | | | | | |
|---|---|---|---|---|---|
| O₂ Index | % | D 2863 | 29 | 29 | 40 |
| UL 94 | -- | D 2863 | V2 | V2 | V0 |

| Smoke density (7 minutes) | | | | | |
|---|---|---|---|---|---|
| Dₘₐₓ (NBS Chamber) | ‰ | D 2843 | 170 | 160 | 145 |
| D₉₀ (ditto) | ‰ | D 2843 | 139 | 35 | 110 |

### Examples 13, 14, 15

With the products from Examples 10, 11, 12 sheaths (diameter = 3 mm) for the coating of 4 pairs of wires were manufactured. Said sheaths were then subjected to the "Steiner 20 Foot Tunnel Test" (UL 910).

The results shown in Table 4 indicate that the products according to the present invention, formulated with the flame-proofing systems according to IT-A-20,548 A/85 and 21,149 A/83, show a better performance than the conventional products.

For comparative purposes, the product described in Example 16 was used.

### Example 16 (Comparative Example)

Following the procedure of Example 1, 486 g of dimethyl terephthalate, 234 g of 1,4-butanediol (excess 0.3 mol) and 510 g of PTMG 1000 were placed in a 3-1 autoclave equipped with distillation column, variable-speed stirring means and temperature-control system.

The temperature was gradually increased to 140-150°C over a time of about 1 hour, and 150 ppm of Ti(OBu)₄, previously dissolved in a few ml (about 10 to 20 ml) of butanediol,were added. After a short induction time, the transesterification reaction started. This reaction was evidenced by an increase of the column overhead temperature to about 65°C, which indicated the removal of methanol. The temperature of the reaction mass was gradually increased up to 205°C (within 2 hours) and was kept constant at this value until the end of methanol distillation.

Thereupon 150 ppm of catalyst (titanium tetrabutoxide) and about 4000 ppm of stabilizer (Irganox® 1010) were added and vacuum was gradually applied until a residual pressure of about 0.05 mm Hg was reached (within about 30 minutes). Heating was continued until an internal temperature of about 250°C was reached. The end of the reaction was determined by means of a measurement of the load applied to the stirrer, which is proportional to the viscosity of the product, i.e., to the molecular weight reached. When the reaction was over, the polymer was discharged by extrusion onto a water-cooled conveyor belt, and was chopped into granules.

The obtained product was rendered flame-proof by means of a conventional system consisting of decabromo-bisphenol A + Sb₂O₃ in the same proportions, and according to the same procedure,as in Example 10, and was then used in order to prepare a sheath (diameter 3 mm) for the coating of 4 pairs of wires. Said sheaths were subsequently subjected to the "Steiner 20 Foot Tunnel Test" according to Standard UL 910. The results are reported in Table 4.

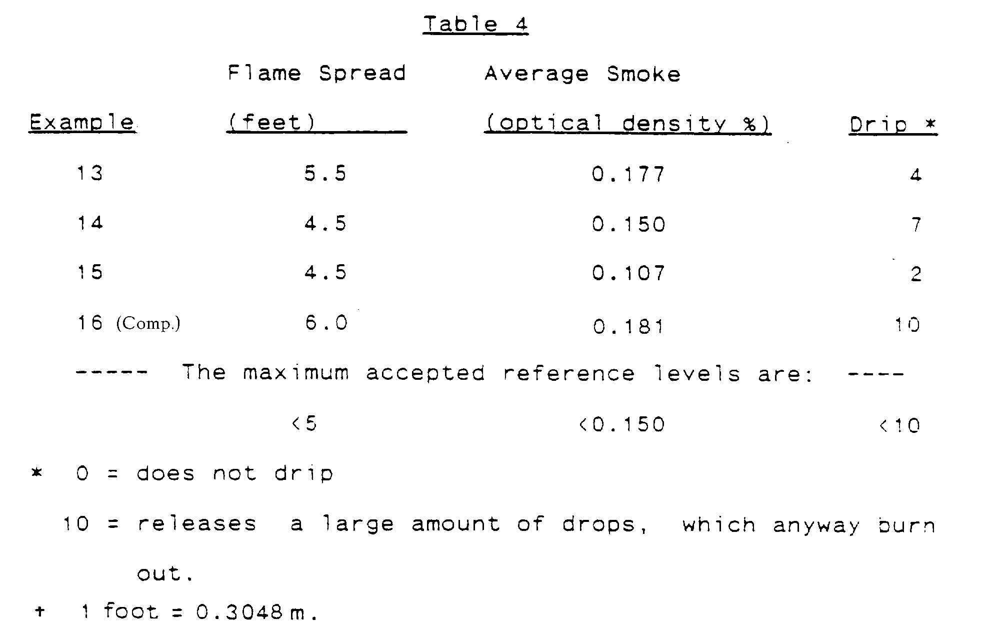

The mechanical properties of the sheaths of Examples 13 to 16 are summarized in Table 5.

**Table 5**

| | | | Thermal Stability: (160 hrs. at 20°C) | |
|---|---|---|---|---|
| Example | Tensile strength MPa | Elongation at break % | Tensile strength MPa | Elongation at break % |
| 13 | 19.5 | 400 | 18.6 | 360 |
| 14 | 12.5 | 680 | 11.8 | 600 |
| 15 | 23.6 | 680 | 20.8 | 470 |
| 16 (Comp.) | 18.0 | 900 | 10.0 | 12 |

As can be seen from Table 5, the products according to the present invention show a higher thermal stability, under air ageing conditions, than the conventional flame-proof polyester compositions.

## Claims

1. Thermoplastic copolyesters, essentially consisting of a multiplicity of long-chain and short-chain ester units connected to each other, inhead-to-tail fashion, through ester linkages, said long-chain ester units being represented by the formula: 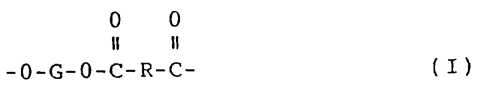 and said short-chain ester units being represented by the formula: 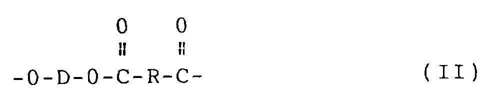 wherein
G represents a divalent radical remaining after the removal of the terminal hydroxy groups from a poly(alkylene oxide) glycol having an average molecular weight not higher than 6000;
R is a divalent radical remaining after the removal of the carboxy groups from a dicarboxylic acid having a molecular weight of less than 300; and
D is a divalent radical remaining after the removal of the hydroxy groups from a diol having a molecular weight of less than 250 and which is different from poly (tetramethylene oxide) glycol
characterized in that
- G is constituted by divalent radicals derivable from a mixture of poly-(tetramethylene oxide)-glycol having a molecular weight within the range of from 650 to 1000, and of poly-(tetramethylene oxide)-glycol having a molecular weight of less than 300, in weight proportions within the range of from 9:1 to 1:9;
- the ratio carbon/oxygen in G ranges from 1.8 to 4.3;
- the amount of short-chain ester units ranges from 25 to 80% by weight, based on the weight of the polyesters.

2. Copolyesters according to claim 1, characterized in that "G" is derived from a mixture of a poly-(tetramethylene oxide)-glycol having a molecular weight of 650 or 1000, and a poly-(tetramethylene oxide)-glycol having a molecular weight of 250, in a weight ratio of from 1:9 to 9:1.

3. Copolyesters according to any one of the preceding claims, characterized in that the dicarboxylic acid is terephthalic acid or a mixture of terephthalic acid and isophthalic acid containing at least 70% by mol of terephthalic acid.

4. Copolyesters according to any one of the preceding claims, characterized in that the diol having a molecular weight of less than 250 is 1,4-butanediol.

5. Copolyesters according to any one of the preceding claims, characterized in that the short-chain ester units constitute 55 to 75% by weight of the polymer.

6. Compositions containing copolyesters according to any one of the preceding claims and furthermore from 15 to 45% by weight, based on the composition, of a flame-proofing system beased on aromatic halides, aliphatic halides and/or products not containing halogen atoms.

7. Compositions according to claim 6, characterized in that the system based on aromatic halides consists of a mixture of octabromo-bisphenol A and Sb₂O₃ in a ratio of 1.5:1, the system based on aliphatic halides consists of a mixture of melamine hydrobromide und Sb₂O₃ in a ratio of 3:1, and the system based on products not containing halogen atoms consists of a mixture of piperazine pyrophosphate and melamine phosphate in a ratio of from 3:1 to 1:1.

8. Use of the copolyesters according to any one of claims 1 to 5 for the extrusion of sheaths, films and fibres.

9. Low-density, flame-proof sheaths for cables, partially or completely composed of a composition according to any one of claims 6 and 7.

## Patentansprüche

1. Thermoplastische Copolyester, die im wesentlichen aus einer Mehrzahl langkettiger und kurzkettiger Estereinheiten bestehen, die durch Esterbindungen in Kopf-Schwanz-Anordnung miteinander verbunden sind, wobei die langkettigen Estereinheiten dargestellt werden durch die Formel: 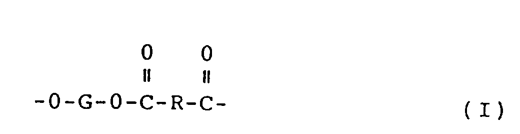 und die genannten kurzkettigen Estereinheiten dargestellt werden durch die Formel: 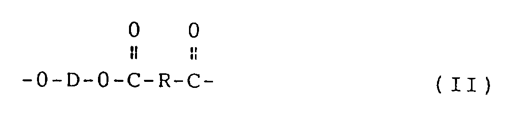 worin
G eine zweiwertige Gruppe bedeutet, die nach dem Entfernen der Hydroxy-Endgruppen von einem Poly(alkylenoxid)glykol mit einem durchschnittlichen Molekulargewicht von nicht mehr als 6000 verbleibt;
R eine zweiwertige Gruppe bedeutet, die nach dem Entfernen der Carboxygruppen von einer Dicarbonsäure mit einem Molekulargewicht von weniger als 300 verbleibt und
D eine zweiwertige Gruppe bedeutet, die nach dem Entfernen der Hydroxygruppen von einem Diol mit einem Molekulargewicht von weniger als 250 verbleibt, und welches sich von Poly(tetramethylenoxid)glykol unterscheidet,
dadurch gekennzeichnet, daß
- G zusammengesetzt ist aus einer zweiwertigen Gruppe, die von einer Mischung von Poly-(tetramethylenoxid) glykol mit einem Molekulargewicht im Bereich von 650 bis 1000, und einem Poly-(tetramethylenoxid)glykol mit einem Molekulargewicht von weniger als 300 stammen kann, und zwar in Gewichtsanteilen von 9:1 bis 1:9;
- das Verhältnis Kohlenstoff/Sauerstoff in G von 1,8 bis 4,3 beträgt;
- die Menge an kurzkettigen Estereinheiten im Bereich von 25 bis 80 Gew.-%, bezogen auf das Gewicht des Polyesters, liegt.

2. Copolyester nach Anspruch 1, dadurch gekennzeichnet, daß "G" sich von einer Mischung eines Poly(tetramethylenoxid)glykols mit einem Molekulargewicht von 650 oder 1000, und einem Poly(tetramethylenoxid)glykol mit einem Molekulargewicht von 250, in einem Gewichtsverhältnis von 1:9 bis 9:1 ableitet.

3. Copolyester nach einem der vorhergehenden Ansprüche, dadurch gekennzeichnet, daß die Dicarbonsäure Terephthalsäure oder eine Mischung von Terephthalsäure und Isophthtalsäure ist, die wenigstens 70 Mol-% Terephthalsäure enthält.

4. Copolyester nach einem der vorhergehenden Ansprüche, dadurch gekennzeichnet, daß das Diol mit einem Molekulargewicht von weniger als 250 1,4-Butandiol ist.

5. Copolyester nach einem der vorhergehenden Ansprüche, dadurch gekennzeichnet, daß die kurzkettigen Estereinheiten 55 bis 75 Gew.-% des Polymers ausmachen.

6. Zusammensetzungen, die die Copolyester nach einem der vorhergehenden Ansprüche enthalten und weiterhin von 15 bis 45 Gew.-%, bezogen auf die Zusammensetzung, eines flammfesten Systems, basierend auf aromatischen Halogeniden, aliphatischen Halogeniden und/oder Produkten, die keine Halogenatome enthalten.

7. Zusammensetzungen nach Anspruch 6, dadurch gekennzeichnet, daß das auf aromatischen Halogeniden basierende System aus einer Mischung von Octabrombisphenol A und Sb₂O₃ in einem Verhältnis von 1,5:1 besteht, das auf aliphatischen Halogeniden basierende System aus einer Mischung von Melaminhydroxybromid und Sb₂O₃ in einem Verhältnis von 3:1 besteht, und das System, das auf Produkten basiert, die keine Halogenatome enthalten, aus einer Mischung von Piperazinpyrophosphat und Melaminphosphat in einem Verhältnis von 3:1 bis 1:1 besteht.

8. Verwendung der Copolyester nach einem der Ansprüche 1 bis 5 zum Strangpressen von Hüllen, Folien und Fasern.

9. Flammfeste Umhüllungen mit geringer Dichte für Kabel, die teilweise oder vollständig aus einer Zusammensetzung nach einem der Ansprüche 6 und 7 zusammengesetzt sind.

## Revendications

1. Copolyesters thermoplastiques essentiellement constitués d'une multiplicité de motifs d'esters à chaîne longue et à chaîne courte reliés les uns aux autres, tête contre queue, par des liaisons esters, lesdits motifs d'ester à chaîne longue étant représentés par la formule : 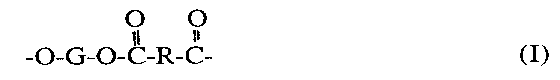 et lesdits motifs d'ester à chaîne courte étant représentés par la formule : 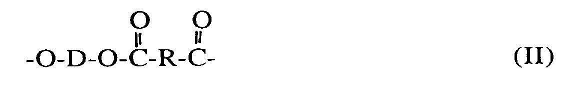 dans lesquelles
G représente un radical divalent restant après l'élimination des groupes terminaux hydroxy d'un poly(oxyalkylène)-glycol présentant une masse moléculaire moyenne ne dépassant pas 6000 ;
R représente un radical divalent restant après l'élimination des groupes carboxy d'un acide dicarboxylique ayant une masse moléculaire inférieure à 300 ; et
D représente un radical divalent restant après l'élimination des groupes hydroxy d'un diol présentant une masse moléculaire inférieure à 250, et qui est différent du poly(oxytétraméthylène)-glycol;
caractérisés en ce que
- G est constitué par des radicaux divalents qui peuvent dériver d'un mélange de poly(oxytétraméthylène)-glycol présentant une masse moléculaire se situant dans l'intervalle allant de 650 à 1000, et de poly(oxytétraméthylène)-glycol présentant une masse moléculaire inférieure à 300, dans des proportions pondérales se situant dans l'intervalle allant de 9/1 à 1/9 ;
- le rapport des atomes de carbone aux atomes d'oxygène dans le radical G est compris entre 1,8 et 4,3 ;
- la quantité de motifs d'ester à chaîne courte vaut de 25 à 80% en poids, par rapport au poids des polyesters.

2. Copolyesters conformes à la revendication 1, caractérisés en ce que "G" dérive d'un mélange d'un poly(oxytétraméthylène)-glycol ayant une masse moléculaire de 650 ou de 1000, et d'un poly(oxytétraméthylène)-glycol ayant une masse moléculaire de 250, dans un rapport pondéral de 1/9 à 9/1.

3. Copolyesters conformes à l'une quelconque des revendications précédentes, caractérisés en ce que l'acide dicarboxylique est l'acide téréphtalique ou un mélange d'acides téréphtalique et isophtalique contenant au moins 70% en moles d'acide téréphtalique.

4. Copolyesters conformes à l'une quelconque des précédentes revendications, caractérisés en ce que le diol ayant une masse moléculaire inférieure à 250 est le 1,4-butanediol.

5. Copolyesters conformes à l'une quelconque des précédentes revendications, caractérisés en ce que les motifs d'ester à chaîne courte constituent 55 à 75% en poids du polymère.

6. Compositions contenant des copolyesters conformes à l'une quelconque des précédentes revendications, et de plus, 15 à 45% en poids, par rapport à la composition, d'un système ignifugeant à base d'halogénures aromatiques, d'halogénures aliphatiques et/ou de produits ne contenant pas d'atomes d'halogène.

7. Compositions conformes à la revendication 6, caractérisées en ce que le système à base d'halogénures aromatiques se compose d'un mélange d'octabromo-bisphénol A et de Sb₂O₃ en un rapport de 1,5/1, le système à base d'halogénures aliphatiques se compose d'un mélange de bromhydrate de mélamine et de Sb₂O₃ en un rapport de 3/1, et le système à base de produits ne contenant pas d'atomes d'halogène se compose d'un mélange de pyrophosphate de pipérazine et de phosphate de mélamine en un rapport de 3/1 à 1/1.

8. Utilisation des copolyesters conformes à l'une quelconque des revendications 1 à 5 pour l'extrusion de gaines, films et fibres.

9. Gaines ignifugées de basse densité destinées à des câbles, en partie ou complètement constituées d'une composition conforme à l'une quelconque des revendications 6 et 7.
